# EUROPEAN PATENT SPECIFICATION

(11) **EP 2 870 014 B1**
(45) Date of publication and mention of the grant of the patent: **07.08.2019**
(21) Application number: 13727189.6
(22) Date of filing: 06.06.2013
(51) Int. Cl.: B60K 11/08, B29C 45/14, B29C 45/00

(54) **METHOD OF INJECTION-MOULDING AN ASSEMBLY WITH A MOVABLE ELEMENT**
VERFAHREN ZUM SPRITZGIESSEN EINER ANORDNUNG MIT EINEM BEWEGLICHEN ELEMENT
PROCÉDÉ DE MOULAGE PAR INJECTION D'UN ENSEMBLE AYANT UN ÉLÉMENT MOBILE

(30) Priority: 04.07.2012 DE 102012013225
(43) Date of publication of application: 13.05.2015
(73) Proprietor: Plastic Omnium Automotive Exteriors GmbH, 80807 München (DE)
(72) Inventor: DIAZ, Francisco Javier, 91785 Pleinfeld (DE); THOULOUZE, Bertrand, 85080 Gaimersheim (DE)
(74) Representative: LLR
(86) International application number: PCT/EP2013/061729
(87) International publication number: WO 2014/005792

(56) References cited:
- EP-A1- 0 615 826
- US-A1- 2006 027 947
- US-A1- 2011 127 693
- US-A1- 2012 097 129

## Description

The present invention relates to a method of injection-moulding an assembly comprising a carrier with a bearing area and a movable element movably mounted on the carrier at the bearing area.

Such a method is known from DE 101 37 771 A1. More precisely, this document teaches the manufacture of an integral combustion engine throttling valve by two component off-tool plastic injection moulding. The resulting throttling valve has a throttle that is rotatably mounted with respect to a frame.

However, the rotational freedom of the throttle is sometimes impaired because of imperfections in its bearing with respect to the frame. Indeed, the injection-moulded bearing may not have sufficient clearance for the throttle to rotate properly or, even worse, injection-moulding may result in the throttle being attached to the frame.

US 2011/0127693 A1 relates to a method of manufacturing throttle valves and throttle bodies.

US 2006/0027947 A1 pertains to a method and apparatus for manufacturing a composite product.

US 2012/0097129 A1 discloses an integrated throttle body manufacturing method.

It is an object of the present invention to provide a method of injection-moulding an assembly with a carrier and a movable element wherein the movable element is securely connected to the carrier while ensuring its freedom of movement.

A further object of the present invention is to provide a method of injection-moulding an assembly with a carrier and a movable element, which saves time and reduces manufacturing and assembly costs.

According to the invention, these objects are achieved by:
- providing an injection mould with a carrier forming cavity and a movable element forming cavity, the carrier forming cavity and the movable element forming cavity sharing a bearing area forming region;
- placing a bearing member at the bearing area forming region such that the bearing member straddles the carrier forming cavity and the movable element forming cavity; and
- injecting plastic material simultaneously into the carrier forming cavity and into the movable element forming cavity thereby forming said assembly,
wherein the bearing member comprises a bearing cavity, and in that the injected plastic material flows into the bearing cavity, thereby forming a bearing stud of the movable element.

Thanks in particular to the inventive bearing member and its positioning at the interface of the two forming cavities prior to the plstic injection a reliable bearing for the movable element is obtained that allows it to move freely.

According to preferred embodiments, the inventive method includes one, several or all of the following features, in all technically possible combinations:
- the carrier forming cavity and the movable element forming cavity are separated by a sealing edge;
- the bearing member is surrounded by the sealing edge in a form-fitting manner;
- a separate and independent injection nozzle is associated with each forming cavity, such as a needle valve hot runner nozzle;
- the part of the bearing member inside the carrier forming cavity is enclosed by the injected plastic material and fastened by the injected plastic to the resulting carrier;
- the bearing member comprises a supporting element and at least one bushing connected to the supporting element;
- the bearing member is an integral plastic member, preferably made of stabilised polyamide 6 or glass fibre reinforced polypropylene;
- bushing being made of metal and said supporting element being made of plastic material;
- the injected plastic material is long glass fibre reinforced polypropylene.
- the forming of at least one fastening rib onto the movable element, by the injection of the plastic material;
- the forming of at least one stiffening rib onto the carrier, by the injection of the plastic material
- the movable element is pivotally mounted on the carrier;
- the carrier is a frame, the movable element is an air flap, and the assembly is an automotive grille shutter.

The invention will now be described in detail with reference to the drawings, wherein:
Figure 1 is a perspective view of an assembly according to the invention, namely an automotive grille shutter;
Figure 2 is a perspective view of the bearing member of the automotive grille shutter of figure 1;
Figure 3 is a longitudinal sectional detail of the bearing area of the automotive grille shutter of figure 1; and
Figure 4 is a cross-sectional view of an injection-mould according to the invention.

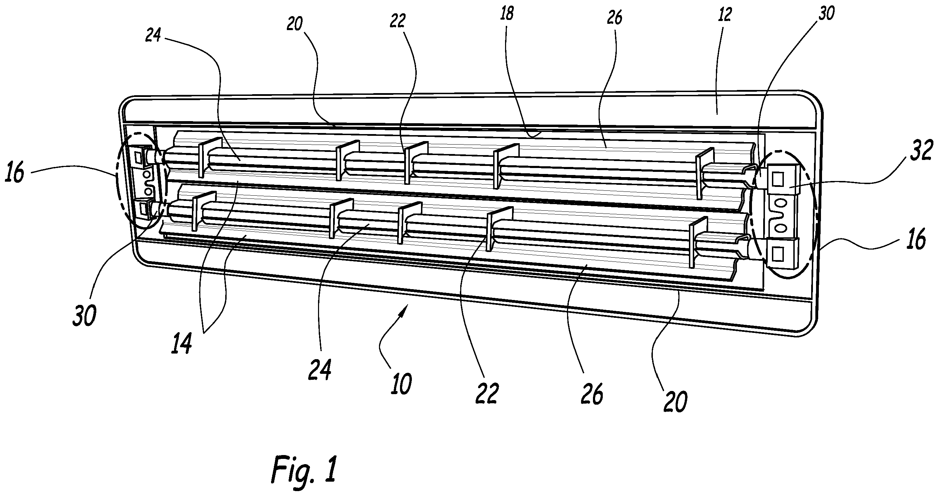

Figure 1 shows an automotive grille shutter 10. This grille shutter is part of the front end module of a motor vehicle. More precisely, in operation, the grille shutter is mounted on the front end carrier of the front end module and regulates the flow of cooling air to the motor vehicle's engine.

The grille shutter 10 includes a carrier 12, namely a frame, and two movable elements 14, namely two air flaps. The frame 12 comprises two bearing areas 16 on opposite sides on which the air flaps 14 are pivotally mounted. The frame 12 has a rectangular shape and an opening 18, which accommodates the two air flaps 14. Preferably, frame 12 is provided with one or several stiffening ribs 20.

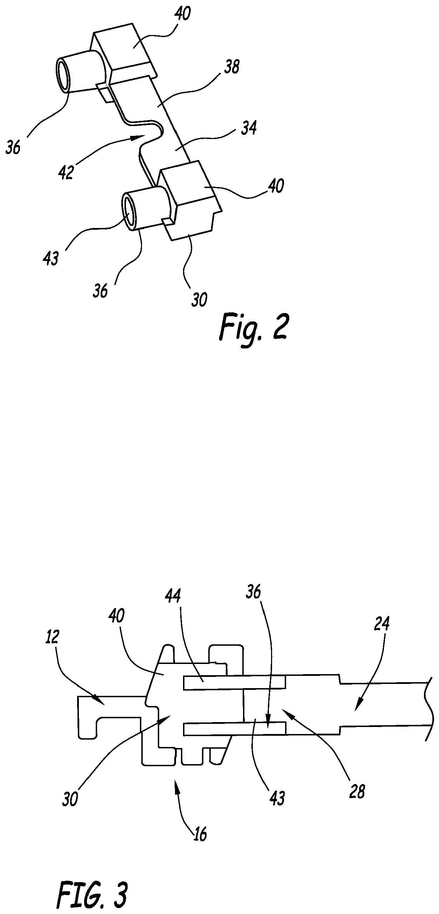

Each air flap 14 has an undulated cross-section and a generally rectangular shape. Preferably, each air flap 14 is provided with one or several fastening ribs 22 for connecting e.g. an air flap driving assembly. Each air flap 14 comprises a central pivoting shaft 24 and two fins 26 extending in opposite directions from the pivoting shaft 24. Two bearing studs 28 (cf. figure 3) form the opposite ends of each pivoting shaft 24. The bearing studs 28 are located in the bearing areas 16 of frame 12.

Each bearing area 16 is provided with a bearing member 30, which is shown in detail in figure 2. Each bearing member 30 is enclosed by a bearing casing 32 of frame 12. Each bearing member 30 includes a supporting element 34 and two bushings 36. Preferably, the bushings 36 are made of metal, and the supporting element is made of plastic. In this case, the supporting element 34 is moulded over one end of each bushing 36. Alternatively, the whole bearing member 30 is an integral plastic member, preferably made of stabilised polyamide 6 or long glass fibre reinforced polypropylene.

Supporting element 34 has a central connecting section 38 and two peripheral supporting sections 40 receiving the bushings 36. Central connecting section 38 has the shape of a strip extending between the two supporting sections 40. Preferably, the central connecting section 38 has a cut-out 42 for tolerance compensation. Each supporting section 40 has a generally cuboidal shape. Each bushing 36 is partially embedded in its associated supporting section 40 and protrudes therefrom. Preferably, the bushings 36 have a cylindrical shape with a bearing cavity 43.

As shown in figure 3, the bearing studs 28 of the pivoting shafts 24 are inserted into the bearing cavities 43 of the bushings 36. The rear end 44 of the bushings 36 is embedded in the corresponding supporting section 40 of the bearing member 30.

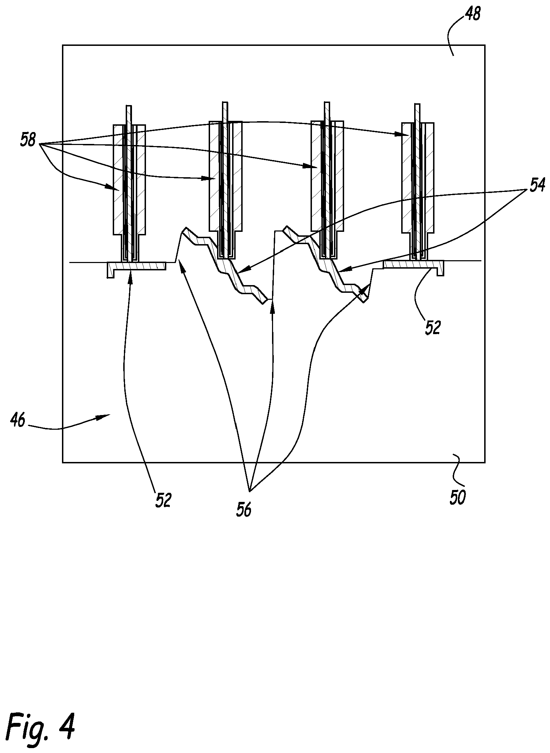

With reference to figure 4, there is shown an injection-mould 46 for manufacturing the grille shutter 10 of figure 1. Mould 46 comprises an upper mould half 48 and a lower mould half 50. Both mould halves are complementary. They can be separated and joined together to form the injection mould cavities. In the joined state, the mould halves 48, 50 define a carrier or frame forming cavity 52 and two movable element of air flap forming cavities 54. The forming cavities 52 and 54 are separated from each other by sealing edges 56. The frame forming cavity 52 and the air flap forming cavities 54 share two bearing area forming regions at opposite longitudinal ends of the injection-mould 46 (not shown). At least one separate and independent injection nozzle 58, preferably a needle valve hot runner nozzle, is provided for each forming cavity 52, 54. In the shown example, two injection nozzles 58 are provided for the frame forming cavity 52. The use of two injection nozzles 58 leads to a more homogeneous distribution of the molten plastic material in frame forming cavity 52 during moulding.

The manufacturing of the grille shutter 10 using the injection-mould 46 will now be described. Firstly, the bearing members 30 are placed at the bearing area forming regions such that each bearing member 30 straddles the frame forming cavity 52 and both air flap forming cavities 54. Subsequently, the two mould halves 48 and 50 are joined to form the injection mould. In this state, the bearing members 30 are surrounded by the sealing edges 56 in a form-fitting manner.

Then, the injection nozzles 58 are operated such that molten plastic material, such as long glass fibre reinforced polypropylene, flows simultaneously into all forming cavities 52, 54. Each injection nozzle 58 is controlled independently. Thus, all forming cavities 52, 54 are evenly filled with molten plastic material. Thanks to the sealing edges 56, the forming cavities 52, 54 are isolated from each other and any fusion between the air flaps and the frame is prevented. The injected plastic material flows into the bearing cavities 43 of the bushings 36, thereby forming the bearing studs 28 of the air flaps 14. The part of the bearing members 30 inside the frame forming cavity 52 is enclosed by the injected plastic material forming the bearing casing 32.

Lastly, the finished grille shutter 10 is demoulded from the injection-mould 46. The air flaps 14 are securely connected to frame 12 while being freely pivotable. No further mounting steps are needed.

Optionally, the bearing cavities 43 of the bushings 36 may be lubricated, e.g. with synthetic lubrication grease, prior to placing the corresponding bearing member 30 inside the injection-mould 46. The use of lubrication grease eases the rotation of the air flaps 14 in the finished grille shutter 10.

Also, if desired, during the injection of the molten plastic material the air flaps 14 may be formed with fastening ribs 22, and/or the frame 12 with stiffening ribs 20.

## Claims

1. A method of injection-moulding an assembly (10) comprising a carrier (12) with a bearing area (16) and a movable element (14) movably mounted on the carrier at the bearing area, the method comprising the successive steps of :
- providing an injection mould (46) with a carrier forming cavity (52) and a movable element forming cavity (54), the carrier forming cavity and the movable element forming cavity sharing a bearing area forming region;
- placing a bearing member (30) at the bearing area forming region such that the bearing member straddles the carrier forming cavity (52) and the movable element forming cavity (54); and
- injecting plastic material simultaneously into the carrier forming cavity (52) and into the movable element forming cavity (54) thereby forming said assembly (10),
**characterized in that** the bearing member (30) comprises a bearing cavity (43), and **in that** the injected plastic material flows into the bearing cavity, thereby forming a bearing stud (28) of the movable element (14).

2. The method of claim 1, wherein the carrier forming cavity (52) and the movable element forming cavity (54) are separated by a sealing edge (56).

3. The method of claim 2, wherein the bearing member (30) is surrounded by the sealing edge (56) in a form-fitting manner.

4. The method of any one of the previous claims, wherein a separate and independent injection nozzle (58) is associated with each forming cavity, such as a needle valve hot runner nozzle.

5. The method of any one of the previous claims, wherein the part of the bearing member (30) inside the carrier forming cavity (52) is enclosed by the injected plastic material and fastened by the injected plastic to the resulting carrier (12).

6. The method of any one of claims 1 to 5, wherein the bearing member (30) comprises a supporting element (34) and at least one bushing (36) connected to the supporting element.

7. The method of any one of the previous claims, wherein the bearing member (30) is an integral plastic member, preferably made of stabilised polyamide 6 or glass fibre reinforced polypropylene.

8. The method of claim 6, said bushing (36) being made of metal and said supporting element (34) being made of plastic material.

9. The method of any one of the previous claims, wherein the injected plastic material is long glass fibre reinforced polypropylene.

10. The method of any one of the previous claims, comprising the forming of at least one fastening rib (22) onto the movable element (14), by the injection of the plastic material.

11. The method of any one of the previous claims, comprising the forming of at least one stiffening rib (20) onto the carrier (12), by the injection of the plastic material.

12. The method of any one of the previous claims, wherein the movable element (14) is pivotally mounted on the carrier (12).

13. The method of any one of the previous claims, wherein the carrier is a frame (12), the movable element is an air flap (14), and the assembly is an automotive grille shutter (10).

## Patentansprüche

1. Verfahren zum Spritzgießen einer Baugruppe (10) aufweisend einen Träger (12) mit einem Lagerbereich (16) und einem beweglichen Element (14), das beweglich am Träger im Lagerbereich angebracht ist, wobei das Verfahren die folgenden Schritte aufweist:
- Versehen einer Spritzgussform (46) mit einem Hohlraum (52) zum Formen eines Trägers und einem Hohlraum (54) zum Formen eines beweglichen Elements, wobei sich der Hohlraum zum Formen eines Trägers und der Hohlraum zum Formen eines beweglichen Elements einen Bereich zum Formen eines Lagerbereichs teilen;
- Anordnen eines Lagerelements (30) an dem Bereich zum Formen eines Lagerbereichs derart, dass das Lagerelement den Hohlraum (52) zum Formen eines Trägers und den Hohlraum (54) zum Formen eines beweglichen Elements überspannt; und
- gleichzeitiges Einspritzen von Kunststoffmaterial in den Hohlraum (52) zum Formen eines Trägers und in den Hohlraum (54) zum Formen eines beweglichen Elements, wodurch die Anordnung (10) gebildet wird,
**dadurch gekennzeichnet, dass** das Lagerelement (30) einen Lagerhohlraum (43) aufweist und dass das eingespritzte Kunststoffmaterial in den Lagerhohlraum fließt, wodurch ein Lagerbolzen (28) des beweglichen Elements (14) gebildet wird.

2. Verfahren nach Anspruch 1, wobei der Hohlraum (52) zum Formen eines Trägers und der Hohlraum (54) zum Formen eines beweglichen Elements durch eine Dichtkante (56) getrennt sind.

3. Verfahren nach Anspruch 2, **dadurch gekennzeichnet, dass** das Lagerelement (30) formschlüssig von der Dichtkante (56) umgeben ist.

4. Verfahren nach einem der vorhergehenden Ansprüche, wobei jedem formenden Hohlraum eine separate und unabhängige Einspritzdüse (58) zugeordnet ist, beispielsweise eine Nadelventil-Heißkanaldüse.

5. Verfahren nach einem der vorhergehenden Ansprüche, wobei der Teil des Lagerelements (30) innerhalb des Hohlraums (52) zum Formen eines Trägers von dem eingespritzten Kunststoffmaterial umschlossen und durch den eingespritzten Kunststoff an dem resultierenden Träger (12) befestigt wird.

6. Verfahren nach einem der Ansprüche 1 bis 5, wobei das Lagerelement (30) ein Stützelement (34) und mindestens eine mit dem Stützelement verbundene Buchse (36) aufweist.

7. Verfahren nach einem der vorhergehenden Ansprüche, wobei das Lagerelement (30) ein einstückiges Kunststoffelement ist, das vorzugsweise aus stabilisiertem Polyamid 6 oder glasfaserverstärktem Polypropylen hergestellt ist.

8. Verfahren nach Anspruch 6, wobei die Buchse (36) aus Metall besteht und das Stützelement (34) aus Kunststoff besteht.

9. Verfahren nach einem der vorhergehenden Ansprüche, wobei das eingespritzte Kunststoffmaterial langglasfaserverstärktes Polypropylen ist.

10. Verfahren nach einem der vorhergehenden Ansprüche, aufweisend das Formen mindestens einer Befestigungsrippe (22) auf dem beweglichen Element (14) durch Einspritzen des Kunststoffmaterials.

11. Verfahren nach einem der vorhergehenden Ansprüche, aufweisend das Formen mindestens einer Versteifungsrippe (20) auf dem Träger (12) durch Einspritzen des Kunststoffmaterials.

12. Verfahren nach einem der vorhergehenden Ansprüche, wobei das bewegliche Element (14) schwenkbar an dem Träger (12) angebracht ist.

13. Verfahren nach einem der vorhergehenden Ansprüche, wobei der Träger ein Rahmen (12) ist, das bewegliche Element eine Luftklappe (14) ist und die Anordnung ein Kühlergrillverschluss (10) für ein Kraftfahrzeug ist.

## Revendications

1. Un procédé de moulage par injection d'un ensemble (10) comprenant un transporteur (12) ayant une zone de support (16) et un élément mobile (14) monté mobile sur le transporteur au niveau de la zone de support, le procédé comprenant les étapes successives consistant à:
- fournir un moule à injection (46) ayant une empreinte de formation de transporteur (52) et une empreinte de formation d'élément mobile (54), l'empreinte de formation de transporteur et l'empreinte de formation d'élément mobile partageant une région de formation de zone de support ;
- placer un élément de support (30) sur la région de formation de zone de support de telle sorte que l'élément de support chevauche l'empreinte de formation de transporteur (52) et l'empreinte de formation d'élément mobile (54), et
- injecter de la matière plastique simultanément dans l'empreinte de formation de transporteur (52) et dans l'empreinte de formation d'élément mobile (54), formant ainsi ledit ensemble (10),
**caractérisé en ce que** l'élément de support (30) comprend une empreinte de support (43), et **en ce que** la matière plastique injectée s'écoule dans l'empreinte de support, formant ainsi un plot de support (28) de l'élément mobile (14).

2. Le procédé selon la revendication 1, dans lequel l'empreinte de formation de transporteur (52) et l'empreinte de formation d'élément mobile (54) sont séparées par un bord d'étanchéité (56).

3. Le procédé selon la revendication 2, dans lequel l'élément de support (30) est entouré par le bord d'étanchéité (56) par complémentarité de forme.

4. Le procédé selon l'une quelconque des revendications précédentes, dans lequel une buse d'injection (58) séparée et indépendante est associée à chaque empreinte de formation, telle qu'une buse à canal chaud avec obturateur à aiguilles.

5. Le procédé selon l'une quelconque des revendications précédentes, dans lequel la partie de l'élément de support (30) à l'intérieur de l'empreinte de formation de support (52) est encloisonnée par la matière plastique injectée et fixée par le plastique injecté au support (12) ainsi obtenu.

6. Le procédé selon l'une quelconque des revendications 1 à 5, dans lequel l'élément de support (30) comprend un élément de soutien (34) et au moins une bague (36) reliée à l'élément de soutien.

7. Le procédé selon l'une quelconque des revendications précédentes, dans lequel l'élément de support (30) est un élément monobloc en plastique, réalisé de préférence en polyamide 6 stabilisé ou en polypropylène renforcé de fibres de verre

8. Le procédé selon la revendication 6, ladite bague (36) étant réalisée en métal et ledit élément de soutien (34) étant réalisé en matière plastique.

9. Le procédé selon l'une quelconque des revendications précédentes, dans lequel la matière plastique injectée est du polypropylène renforcé de fibres de verre longues.

10. Le procédé selon l'une quelconque des revendications précédentes, comprenant la formation d'au moins une nervure de fixation (22) sur l'élément mobile (14), par injection de la matière plastique.

11. Le procédé selon l'une quelconque des revendications précédentes, comprenant la formation d'au moins une nervure de rigidification (20) sur le support (12), par injection de la matière plastique.

12. Le procédé selon l'une quelconque des revendications précédentes, dans lequel l'élément mobile (14) est monté pivotant sur le support (12).

13. Le procédé selon l'une quelconque des revendications précédentes, dans lequel le support est un cadre (12), l'élément mobile est un volet (14), et l'ensemble est un obturateur de calandre de véhicule (10).
